# EUROPEAN PATENT SPECIFICATION

(11) **EP 3 056 329 B1**
(45) Date of publication and mention of the grant of the patent: **04.04.2018**
(21) Application number: 15154854.2
(22) Date of filing: 12.02.2015
(51) Int. Cl.: B29C 43/36, B29C 33/20, B29C 43/10, B29C 59/02, B29C 43/02

(54) **PRESSING/EMBOSSING DEVICE AND METHOD**
PRESS-/PRÄGEVORRICHTUNG UND VERFAHREN
DISPOSITIF ET PROCÉDÉ DE PRESSAGE/GAUFRAGE

(43) Date of publication of application: 17.08.2016
(73) Proprietor: TCTech Sweden AB, 374 35 Karlshamn (SE)
(72) Inventor: Jäderberg, Jan, SE-16347 Spånga (SE)
(74) Representative: Industripatent i Växjö AB

(56) References cited:
- EP-A1- 0 691 551
- GB-A- 1 402 096
- US-A1- 2002 181 224
- US-A1- 2013 187 309

## Description

### Technical field

The present disclosure relates to a device for pressing/embossing a blank, which device comprises a first and a second tool half, between which halves a blank can be pressed by active surfaces of the tool halves.

### Background

Such a device is disclosed in WO-2014/104963-A1 which shows an embossing/pressing device suited for producing e.g. lightguide plates for LCD screens. By using active heating and cooling during a production cycle, such a device can have relatively short cycle times and consequently high throughput. Very fine patterns can be embossed. One problem associated with such devices is how to provide a more economic device.

GB-A-1 402 096 discloses a device comprising a driving unit for closing mould halves and a pressurizing unit to increase the pressure in the closed position of the mould halves. However, this document does not provide means for effectively locking the mould halves in the closed position.

### Summary

The objective of the invention is achieved by the device as defined in appended claim 1 and the method as defined in appended claim 9. Preferred embodiment are disclosed in the dependent claims. More specifically, a driving device is provided which is adapted to move the first tool half relative to the second tool half between an open position, where a blank can be inserted in or removed from a space between the tool halves, and a closed position, where a blank is to be pressed/embossed between the halves. A locking device is provided that locks the tool halves in the closed position. There is further arranged a hydraulic container, the pressure in which is transferred to at least a part of the active surfaces. A movable pressing piston is activated to be moved when the pressing/embossing device is in the closed position and the locking device is activated to increase the pressure in the hydraulic container in such a way that the active surfaces are pressed together.

In this way, the driving device, which may be a simple and relatively weak actuator, can carry out the larger part of the stroke which is needed to open the device enough to remove finished products and to insert new blanks. The actual pressing can be carried out by the pressing piston which provides only a small movement but with high force.

Thanks to this arrangment a pressing/embossing device can be provided which has a hydraulic system with much lower requirements, thus being less expensive.

The device may typically be of the type where heating of the active surfaces takes place during pressing, e.g. by means of inductive heating.

The hydraulic container may be connected to or included in a main hydraulic cylinder, a piston of which is connected to one of the tool halves. In this case, the pressing piston presses one tool half as a whole against the other tool half.

Alternatively, the hydraulic container may influence a hydraulic layer in a tool half, in the vicinity of an active surface. The pressing piston may then make the active surface of one tool half bulge towards the other tool half's active surface, thereby providing the pressing. Both tool halves may function in this way.

The device may typically comprise a main hydraulic cylinder, which is connected to a reservoir via a conduit. A piston of the main hydraulic cylinder may then be connected to either of the tool halves, such that the driving unit's moving of the tool half causes the main hydraulic cylinder to suck hydraulic fluid from the reservoir. The locking device may include a valve operating on the conduit. When the valve is shut, the pressing piston may increase the pressure in the main hydraulic cylinder to provide the pressing, without causing fluid to leak back into the reservoir.

The driving device may be weak, and typically cannot drive the tool half further once the valve is closed. It may be a a linear actuator, e.g. a screw-type actuator.

The pressing piston may be connected to a hydraulic booster, which allows e.g. a lower pneumatic pressure to generate the higher hydraulic pressure needed for embossing.

### Brief description of the drawings

Fig 1 illustrates schematically a pressing/embossing device according to known art in an open position, and fig 2 shows the device of fig 1 in a closed position.
Figs 3 and 4 illustrate schematically a pressing/embossing device according to the present disclosure in an open position and a closed position, respectively.
Fig 5 illustrates an example where pressing is actuated by means of a flat cavity in the vicinity of an active surface.

### Detailed description

Pressing/embossing devices may be used to emboss a surface pattern on a blank, such as a plastic blank. One typical application is to produce a lightguide plate for a backlit LCD TV screen. A flat, possibly sligthly wedge shaped and transparent plastic blank is embossed in a tool to provide a lightguide plate with a fine surface pattern on at least one side thereof. When an edge of that lightguide is provided with light, from e.g. a number of light emitting diodes, light propagates through the lightguideplate by total reflection. However, thanks to the embossed surface pattern, light leaks out of the plate evenly over one of its surfaces to provide the backlighting function.

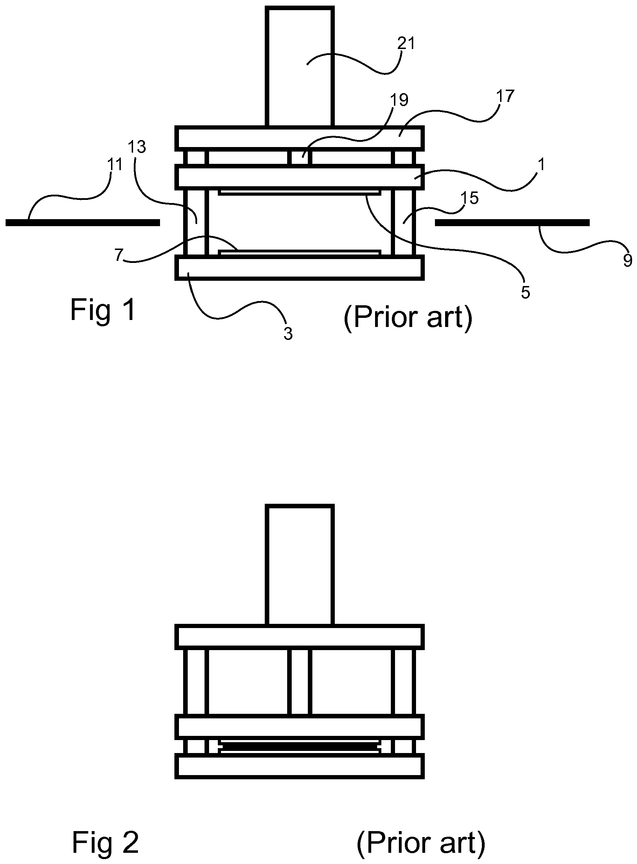

Fig 1 illustrates schematically a side view of a pressing/embossing device according to known art, which is deviced as a hydraulic press. The device has a first 1 and a second 3 tool half, each having an active surface 5, 7 between which blank can be pressed. Either or both the active surfaces may comprise a stamper that provides a pattern on a blank. By active surface is meant that the surface comes into contact with the blank during pressing/embossing. In fig 1, the device is in an open state, which means that a finished procuct 9 can be removed and a new blank 11 can be inserted. The first and second tool halves 1, 3 are devised to be moveable relative to each other. In the illustrated case, the bottom tool half 3 is fixed, and is devised also as a bottom frame. The top tool half 1 is linearly moveable towards and away from the bottom tool half 1, guided by guide pillars 13, 15, attached between the bottom frame 3 and a top frame 17. Typically four guide pillars can be used, one at each corner of a rectangular tool half. The top tool half 1 is moved by the piston 19 of a hydraulic cylinder 21, which is attached to the top frame. Needless to say, other configurations are possible, e.g. where both tool halves move.

In fig 2, the top tool half 1 has moved to a closed position, and carries out pressing, by means of the hydraulic cylinder that provides a pressure of about 3- 10 MPa (typically 5 MPa) on an inserted blank between the active surfaces 5,7 of the tool halves 1,3. At the same time heating and subsequent cooling of the active surfaces 5,7 may take place, in order to achieve a more reliable pattern replication and shorter production cycle times. When the pressing/embossing is finished, the device returns to the open state illustrated in fig 1, such that the finished product can be accessed.

The device illustrated in figs 1-2 will be quite bulky and heavy in order to be able to press a blank of a few square decimeters, typically several tonnes. The following describes a pressing/embossing device which can be made considerably lighter. Even if the framework may be the same with guide pillars, tool halves, etc. may be the same, the hydraulic arrangement with complex motors, pumps, accumulators (not shown) and valve systems can be much lighter, and less expensive. Additionally, the system as a whole becomes more compatible with clean room requirements that often need be fulfilled in production systems of this kind, as big hydraulic pumps etc. may often spread small fluid droplets that can compromise a finished product.

In this disclosure it has been recognised that one reason for the required high weight/complexity of prior art devices is that the hydraulic cylinder must be capable both of providing high pressure in order to provide the embossing effect, and of performing a stroke with a significant length, in order to allow finished products to be removed and new blanks inserted into the device in the open state.

In the following, a pressing/embossing device for pressing a blank is disclosed, where the device comprises a first and a second tool half, between active surfaces of which a blank can be pressed/embossed. A driving device is arranged to move the first tool half relative to the second tool half between an open position where a blank can be inserted or removed from a space between the tool halves, and a closed position where a blank can be pressed/embossed between the halves. Thus the stroke length is provided by the driving device, but the driving device, typically a screw type actuator, need not be capable of providing the actual pressing force. Once the closed position is reached, a locking device may lock the tool halves in the closed position, in such a way that the driving device cannot further influence the relative position between the tool halves. The pressing, which involves a comparatively small movement, is carried out with hydraulic means.

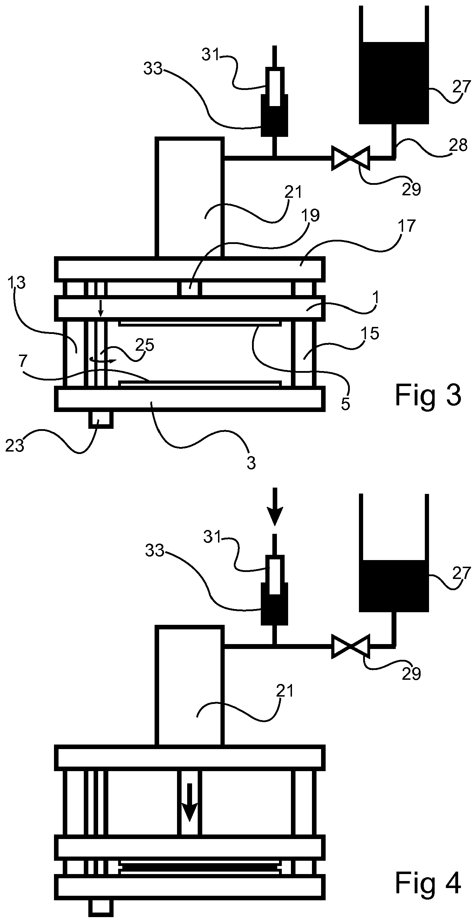

Fig 3 illustrates schematically a pressing/embossing device according to the present disclosure in an open position which can be compared to the position illustrated in fig 1. This device can be built in a similar way as in fig 1 with first and second tool halves 1, 3, the bottom tool half 3 being fixed and functioning as a bottom frame, the top tool half 1 being linearly moveable towards and away from the bottom tool half 1, guided by guide pillars 13, 15, attached between the bottom frame 3 and a top frame 17. The tool halves 1, 3 have active surfaces 5, 7.

The top tool half 1 is connected to a piston 19 of a main hydraulic cylinder 21, attached to the top frame 17. However, when the top tool half 1 is moved downwards, towards the closed position; this is carried out by means of a separate driving unit/actuator 23, 25. The driving unit 23, 25 may be one or more screw type actuators of a kind, well known per se, simply a motor 23 attached to the bottom frame which drives a threaded rod 25. The rod 25 is in threaded engagement with the top tool half 1, such that a rotation of the rod 25 translates to a linear movement of the top tool half 1 towards or away from the bottom tool half/frame 3. Needless to say, the skilled person can find other conceivable configurations for providing the driving unit, e.g. a pneumatic cylinder.

In the example shown in fig 3, a main hydraulic cylinder 21 with a piston 19 is capable of following the moving tool halfs 1 motion, although the driving unit 23, 25 provides this motion. Hydraulic fluid is sucked from a reservoir 27 through a conduit 28, the fluid passing an open valve 29. This proceeds until a closed position is reached as illustrated in fig 4.

At this point pressing/embossing step is about to be carried out, and the driving unit 23, 25 may be incapable of providing the pressure needed for that step. Instead, the pressing is achieved with a piston 31 operating in connection with the main hydraulic cylinder 21. First however, the valve 29 is shut such that fluid cannot leak back to the reservoir 27. The valve therefore functions as a locking device that locks the tool halves in the closed position. The driving device may be too weak to mutually move the tool halves any further as long as the locking device is locked.

Then, a relatively small stroke with a hydraulic pressing piston 31 is enough to apply a significant pressure in the embossing-/pressing stage. The hydraulic piston 31 can operate in a separate cylinder 33 connected to the main hydraulic cylinder 21, and this device can be achieved as a low-weight, inexpensive arrangement. It is even possible to let the hydraulic piston 31 act on the main hydraulic cylinder itself.

Moreover, a hydraulic pressure booster (not shown), which is well known per se, may be applied where a relatively low pneumatic pressure is applied to a pneumatic cylinder, influencing the hydraulic piston and having a larger piston cross section than the hydraulic piston 31, such that a relatively higher hydraulic pressure is achieved. The skilled person can readily accomplish other suitable hydraulic and pneumatic layouts, for instance employing regenerative loops.

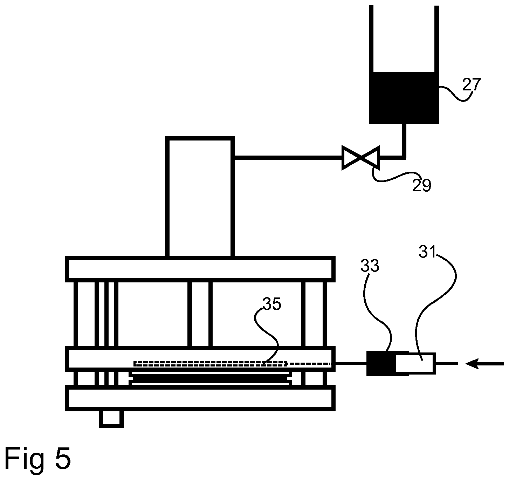

While in the arrangement described in connection with figs 3 and 4 still produce the pressing force via the main hydraulic cylinder 21, other arrangements are conceivable. The aforementioned publication WO-2014/1 04963-A1 describes tool halves where a fluid layer is disposed in a cavity beneath the active surface, in order to avoid the transmission of shear forces to the active surface. It is also discussed to regulate the pressure in this cavity to make the surface bulge, such that the risk for trapping pockets of air between the active surface and a blank when the tool halves are pressed together is reduced. It would be conceivable, as shown in fig 5, to modify the arrangement in figs 3 and 4, such that the pressing piston 31, that is activated in order to carry out the pressing, operates in a cylinder 33 which is connected instead to such a cavity 35 in a tool half. The movement of the piston then makes the active surface bulge to provide the pressing force, after the locking device has been activated. Both tool halves may have this arrangement.

The invention is not restricted to the described embodiment, and may be varied and altered in different ways within the scope of the appended claims. For instance, other locking devices than a hydraulic valve may be considered. In the example shown in fig 5, the tool halves could for instance be mechanically attached to each other in the closed state to provide the locking function.

## Claims

1. Device for pressing/embossing a blank, the device comprising a first (1) and a second (3) tool half, between which halves a blank can be pressed by active surfaces (5, 7) of the tool halves, comprising a driving unit (23, 25) adapted to move the first tool half relative to the second tool half between an open position where a blank can be inserted in or removed from a space between the tool halves and a closed position where a blank is pressed/embossed between the halves, **characterized by** a locking device (29) for locking the tool halves in the closed position, a hydraulic container (33; 35), the pressure in which is transferred to at least a part of said active surfaces, and a movable pressing piston (31) which is adapted to be moved when the pressing/embossing device is in the closed position and the locking device is activated, to increase the pressure in the hydraulic container in such a way that the active surfaces are pressed together.

2. A device according to claim 1, wherein active heating of the active surfaces takes place during pressing.

3. A device according to claim 1 or 2, wherein the hydraulic container (33) is connected to or included in a main hydraulic cylinder (21), a piston (19) of which is connected to one of the tool halves.

4. A device according to claim 1 or 2, wherein the container (33) is connected to a hydraulic layer (35) in a tool half, in the vicinity of an active surface (5).

5. A device according to any of the preceding claims, comprising a main hydraulic cylinder (21), which is connected to a reservoir (27) via a conduit (28), wherein a piston (19) of the hydraulic cylinder is connected to either (1) of the tool halves, such that the driving unit's (23, 25) moving of the tool half causes the main hydraulic cylinder to suck hydraulic fluid from the reservoir, and wherein the locking device includes a valve (29) operating on the conduit.

6. A device according to claim 5, wherein the driving device (23) cannot drive the tool half once the valve is closed.

7. A device according to any of the preceding claims, wherein the driving device (23, 25) is a linear actuator, such as a screw type actuator.

8. A device according to any of the preceding claims, wherein the piston is connected to an hydraulic booster.

9. Method for pressing/embossing a blank, between a first (1) and a second (3) tool half, the blank being pressed by active surfaces (5, 7) of the tool halves, comprising a driving unit such that the first tool half moves towards the second tool half from an open position where a blank can be inserted or removed from a space between the tool halves to a closed position where a blank can be pressed/embossed between the halves, **characterized by** locking the tool halves in the closed position, by means of a locking device (29), and moving a pressing piston into a hydraulic container (33), the pressure in which influences at least a part of said active surfaces, to increase the pressure in the hydraulic container in such a way that the active surfaces (5,7) of the tool halves are pressed together.

## Patentansprüche

1. Vorrichtung zum Pressen/Prägen eines Zuschnitts, wobei die Vorrichtung eine erste (1) und eine zweite (3) Werkzeughälfte umfasst, wobei zwischen den Hälften ein Zuschnitt durch Wirkflächen (5, 7) der Werkzeughälften gepresst werden kann, die eine Antriebseinheit (23, 25) umfassen, die ausgelegt ist, um die erste Werkzeughälfte relativ zu der zweiten Werkzeughälfte zwischen einer offenen Position, in der ein Zuschnitt in einen Raum zwischen den Werkzeughälften eingesetzt oder daraus entfernt werden kann, und einer geschlossenen Position, in der ein Zuschnitt zwischen den Hälften gepresst/geprägt wird, zu bewegen, **gekennzeichnet durch** eine Verriegelungsvorrichtung (29) zum Verriegeln der Werkzeughälften in der geschlossenen Position, einen Hydraulikbehälter (33, 35), in dem der Druck auf mindestens einen Teil der Wirkflächen übertragen wird, und einen beweglichen Presskolben (31), der ausgelegt ist, um bewegt zu werden, wenn die Press-/Prägevorrichtung in der geschlossenen Position ist und die Verriegelungsvorrichtung aktiviert ist, um den Druck in dem Hydraulikbehälter in einer derartigen Weise zu erhöhen, dass die Wirkflächen zusammengepresst werden.

2. Vorrichtung nach Anspruch 1, wobei während eines Pressens ein aktives Erwärmen der Wirkflächen stattfindet.

3. Vorrichtung nach Anspruch 1 oder 2, wobei der Hydraulikbehälter (33) mit einem Haupthydraulikzylinder (21) verbunden oder darin aufgewiesen ist, dessen Kolben (19) mit einer der Werkzeughälften verbunden ist.

4. Vorrichtung nach Anspruch 1 oder 2, wobei der Behälter (33) mit einer Hydraulikschicht (35) in einer Werkzeughälfte in der Nähe einer Wirkfläche (5) verbunden ist.

5. Vorrichtung nach einem der vorhergehenden Ansprüche, die einen Haupthydraulikzylinder (21) umfasst, der mit einem Vorrat (27) über eine Leitung (28) verbunden ist, wobei ein Kolben (19) des Hydraulikzylinders mit einer (1) der Werkzeughälften derart verbunden ist, dass das Bewegen der Werkzeughälfte der Antriebseinheit (23, 25) den Haupthydraulikzylinder dazu veranlasst, Hydraulikfluid aus dem Vorrat anzusaugen, und wobei die Verriegelungsvorrichtung ein Ventil (29) aufweist, das auf die Leitung wirkt.

6. Vorrichtung nach Anspruch 5, wobei die Antriebsvorrichtung (23) die Werkzeughälfte nicht antreiben kann, sobald das Ventil geschlossen ist.

7. Vorrichtung nach einem der vorhergehenden Ansprüche, wobei die Antriebsvorrichtung (23, 25) ein linearer Aktor ist, wie etwa ein Schraubentyp-Aktor.

8. Vorrichtung nach einem der vorhergehenden Ansprüche, wobei der Kolben mit einem hydraulischen Verstärker verbunden ist.

9. Verfahren zum Pressen/Prägen eines Zuschnitts zwischen einer ersten (1) und einer zweiten (3) Werkzeughälfte, wobei der Zuschnitt durch Wirkflächen (5, 7) der Werkzeughälften gepresst wird, die eine Antriebseinheit derart umfassen, dass sich die erste Werkzeughälfte hin zu der zweiten Werkzeughälfte von einer offenen Position, in der ein Zuschnitt in einen Raum zwischen den Werkzeughälften eingesetzt oder daraus entfernt werden kann, zu einer geschlossenen Position, in der ein Zuschnitt zwischen den Hälften gepresst/geprägt werden kann, bewegt, **gekennzeichnet durch** ein Verriegeln der Werkzeughälften in der geschlossenen Position mittels einer Verriegelungsvorrichtung (29) und ein Bewegen eines Presskolbens in einen Hydraulikbehälter (33), in dem der Druck mindestens einen Teil der Wirkflächen beeinflusst, um den Druck in dem Hydraulikbehälter in einer derartigen Weise zu erhöhen, dass die Wirkflächen (5, 7) der Werkzeughälften zusammengepresst werden.

## Revendications

1. Dispositif de pressage/gaufrage d'une ébauche, ce dispositif comprenant une première (1) et une seconde (3) moitiés d'outil, moitiés entre lesquelles une ébauche peut être pressée par des surfaces actives (5, 7) des moitiés d'outils, comprenant une unité d'entraînement (23, 25) apte à déplacer la première moitié d'outil par rapport à la seconde moitié d'outil entre une position ouverte où une ébauche peut être insérée ou retirée d'un espace situé entre les moitiés d'outil et une position fermée où une ébauche est pressée/gaufrée entre les moitiés, **caractérisé par** un dispositif de verrouillage (29) pour verrouiller les moitiés d'outil dans la position fermée, un réservoir hydraulique (33; 35) dont la pression intérieure est transférée à au moins une partie desdites surfaces actives, et un piston de pressage mobile (31) apte à être déplacé lorsque le dispositif de pressage/gaufrage est dans la position fermée et que le dispositif de verrouillage est activé afin d'augmenter la pression dans le réservoir hydraulique de manière à ce que les surfaces actives soient pressées ensemble.

2. Dispositif selon la revendication 1, dans lequel un chauffage actif des surfaces actives a lieu pendant le pressage.

3. Dispositif selon la revendication 1 or 2, dans lequel le réservoir hydraulique (33) est connecté à ou inclus dans un cylindre hydraulique principal (21) dont un piston (19) est connecté à une des moitiés d'outil.

4. Dispositif selon la revendication 1 ou 2, dans lequel le réservoir (33) est connecté à une couche hydraulique (35) dans une moitié d'outil, à proximité d'une surface active (5).

5. Dispositif selon l'une quelconque des revendications précédentes, comprenant un cylindre hydraulique principal (21) qui est connecté à un réservoir (27) via une conduite (28), un piston (19) du cylindre hydraulique étant connecté à l'une quelconque (1) des moitiés d'outil, de sorte que le déplacement de l'unité d'entraînement (23, 25) amène le cylindre hydraulique principal à aspirer du fluide hydraulique dans le réservoir, et le dispositif de verrouillage comprenant une vanne (29) fonctionnant sur la conduite.

6. Dispositif selon la revendication 5, dans lequel le dispositif d'entraînement (23) ne peut pas entraîner la moitié d'outil une fois que la vanne est fermée.

7. Dispositif selon l'une quelconque des revendications précédentes, dans lequel le dispositif d'entraînement (23, 25) est un actionneur linéaire tel qu'un actionneur de type à vis.

8. Dispositif selon l'une quelconque des revendications précédentes, dans lequel le piston est connecté à un amplificateur hydraulique.

9. Procédé de pressage/gaufrage d'une ébauche entre une première (1) et une seconde (3) moitié d'outil, l'ébauche étant pressée par des surfaces actives (5, 7) des moitiés d'outil, comprenant une unité d'entraînement telle que la première moitié d'outil se déplace vers la seconde moitié d'outil depuis une position ouverte où une ébauche peut être insérée ou retirée d'un espace situé entre les moitiés d'outil jusqu'à une position fermée où une ébauche peut être pressée/gaufrée entre les moitiés, **caractérisé par** le verrouillage des moitiés d'outil dans la position fermée au moyen d'un dispositif de verrouillage (29), et le déplacement d'un piston à l'intérieur d'un réservoir hydraulique (33) dont la pression intérieure influence au moins une partie desdites surfaces actives afin d'augmenter la pression dans le réservoir hydraulique de manière à ce que les surfaces actives (5,7) des moitiés d'outils soient pressées ensemble.
